# EUROPÄISCHE PATENTSCHRIFT

(11) **EP 3 472 554 B1**
(45) Veröffentlichungstag und Bekanntmachung des Hinweises auf die Patenterteilung: **17.11.2021**
(21) Anmeldenummer: 17739853.4
(22) Anmeldetag: 16.06.2017
(51) Int. Cl.: G01B 11/06, G01N 21/3586

(54) **TERAHERTZ-MESSVORRICHTUNG UND EIN TERAHERTZ-MESSVERFAHREN, ZUR VERMESSUNG EINES PRÜFOBJEKTES MITTELS EINER LAUFZEITMESSUNG**
TERAHERTZ MEASURING APPARATUS AND TERAHERTZ MEASUREMENT METHOD FOR MEASURING A TEST OBJECT BY MEANS OF A TIME-OF-FLIGHT MEASUREMENT
DISPOSITIF DE MESURE TÉRAHERTZ ET PROCÉDÉ DE MESURE TÉRAHERTZ POUR MESURER UN OBJET À CONTRÔLER AU MOYEN D'UNE MESURE DU TEMPS DE PROPAGATION

(30) Priorität: 16.06.2016 DE 102016111044
(43) Veröffentlichungstag der Anmeldung: 24.04.2019
(73) Patentinhaber: iNOEX GmbH Innovationen und Ausrüstungen für die Extrusionstechnik, 49324 Melle (DE)
(72) Erfinder: KLOSE, Ralph, 49324 Melle (DE)
(74) Vertreter: Bremer, Ulrich
(86) Internationale Anmeldenummer: PCT/DE2017/100502
(87) Internationale Veröffentlichungsnummer: WO 2017/215712

(56) Entgegenhaltungen:
- WO-A1-2015/073807
- US-A1- 2007 235 658
- US-A1- 2015 219 571
- J. HAUCK ET AL: "Terahertz inline wall thickness monitoring system for plastic pipe extrusion", AIP CONFERENCE PROCEEDINGS, 1. Januar 2014 (2014-01-01), Seiten 86-89, XP055155617, ISSN: 0094-243X, DOI: 10.1063/1.4873740

## Beschreibung

Die Erfindung betrifft eine Terahertz-Messvorrichtung und ein Terahertz-Messverfahren, zur Vermessung eines Prüfobjektes mittels einer Laufzeitmessung.

Bei derartigen Messvorrichtungen und Messverfahren wird Terahertz-Strahlung von einer Terahertz-Sende- und Empfangseinheit entlang einer optischen Achse auf ein Prüfobjekt gestrahlt und die von dem Prüfobjekt zurück reflektierte Strahlung wiederum von der Terahertz-Sende- und Empfangseinheit detektiert, wobei die Laufzeit der Strahlung ermittelt werden kann. Hierbei kann z. B. gepulste Strahlung ausgesandt und die Laufzeit der Pulse gemessen werden, oder es kann frequenzmodulierte Strahlung ausgesandt werden mit einer Messung im Frequenzbereich, wobei derartige Messverfahren sich technisch entsprechen bzw. als Fouriertransformation zueinander beschrieben werden können. Somit können Prüfobjekte vermessen werden, die für die Terahertz-Strahlung durchlässig sind, insbesondere Kunststoffe, weiterhin auch Stein-Materialien wie Steingut, Porzellan, Keramik und zum Beispiel Papier.

Die Terahertz-Strahlung wird an Grenzflächen zwischen Materialien mit verschiedenem Brechungsindex, zum Beispiel Luft mit einem Brechungsindex von n0=1, und Kunststoffmaterialien mit Brechungsindex von zum Beispiel etwa 1,5, teilweise reflektiert, sodass die senkrecht an einer Grenzfläche reflektierte und entlang der optischen Achse zu der Terahertz-Sende- und Empfangseinheit zurück reflektierte Strahlung detektiert werden kann. Bei der Messung erfolgt in der Terahertz-Sende- und Empfangseinheit im Allgemeinen eine Überlagerung der ausgesandten und der detektierten reflektierten Strahlung, aus der die Laufzeit sehr genau ermittelt werden kann. Somit können Abstände zu einem Prüfobjekt , weiterhin auch Schichtdicken der Prüfobjekte an Grenzflächen senkrecht zur optischen Achse ermittelt werden.

Für eine vollständige oder vollumfängliche Vermessung des Prüfobjektes, z. B. eines Rohres, ist daher eine höhere Anzahl von Terahertz-Sende- und Empfangseinheiten erforderlich, die im Allgemeinen weiterhin mechanisch verstellt werden, um das Prüfobjekt an seiner Oberfläche oder seinem Umfang vollständig zu erfassen. Derartige mechanische Verstellungen sind jedoch im Allgemeinen aufwendig.

Die US 2007/0235658 A1 beschreibt ein System zur Vermessung eines Artikels, insbesondere eines Gepäckstückes, bei dem ein oder mehrere THz-Module THz-Strahlung erzeugen oder detektieren. Es kann Strahlung im Transmissionsmodus durch einen Artikel geleitet oder im Reflektionsmodus reflektierte Strahlung detektiert werden. Hierbei wird eine Vielzahl von Voxeln, d. h. eine zwei-dimensionale Auflösung in Bildpunkte mit spezifischem Volumen und Signaturen ausgebildet, die durch Material-Eigenschaften, insbesondere das Absorptionsverhalten und den Brechungsindex der THz-Strahlung, festgelegt sind.

Die WO 2015/073807 A1 beschreibt die Vermessung von dielektrischen Schichten mittels THz-Strahlung, die von einem Sender ausgegeben und einem Detektor detektiert wird. Es wird eine Wellenform ausgegeben, und in dem detektierten Signal ermittelt, wo die gemessene Wellenform der Modell-Wellenform entspricht. Hierbei kann die Dicke einer dielektrischen Schicht ermittelt werden und ein komplexer Brechungsindex mit Absorptions-Eigenschaft ermittelt werden.

Der Erfindung liegt daher die Aufgabe zugrunde, eine Terahertz-Messvorrichtung und ein Terahertz-Messverfahren zu schaffen, die mit relativ geringem Aufwand eine breitflächige Vermessung von Messobjekten ermöglichen.

Diese Aufgabe wird durch eine Terahertz-Messvorrichtung und ein Terahertz-Messverfahren nach den unabhängigen Ansprüchen gelöst. Die Unteransprüche beschreiben bevorzugte Weiterbildungen.

Das erfindungsgemäß Terahertz-Messverfahren kann insbesondere mit einer erfindungsgemäßen Terahertz-Messvorrichtung ausgeführt werden; die erfindungsgemäße Terahertz-Messvorrichtung ist insbesondere zur Durchführung eines erfindungsgemäßen Terahertz-Messverfahren vorgesehen.

Somit ist zusätzlich zu der Terahertz-Sende- und Empfangseinheit mindestens eine passive Terahertz-Empfangseinheit vorgesehen, die die von der Terahertz-Sende- und Empfangseinheit ausgesandte und an dem Prüfobjekt reflektierte zweite Strahlung detektiert. Hierbei nimmt die passive Terahertz-Empfangseinheit ein Synchronisierungssignal auf, das den Sendezeitpunkt der Terahertz-Strahlung festlegt.

Hierdurch wird bereits der Vorteil erreicht, dass mit geringem apparativem Aufwand und relativ geringem Energieaufwand eine breitflächige Vermessung des Prüfobjektes ermöglicht wird, insbesondere auch mit geringer oder gar keiner mechanischen Verstellung der Einheiten. Es sind Messungen mit nicht-senkrechtem Einfall der THz-Strahlung an den Grenzflächen möglich, die große Bereiche des Prüfobjektes erfassen können.

Vorteilhafterweise zieht die passive Terahertz-Empfangseinheit bzw. die Auswerteeinheit zur Auswertung ergänzend gespeicherte Daten über eine geometrische Ausbildung, insbesondere relative geometrische Anordnungen der Position und Ausrichtung ihrer optischen Achse sowie der Position und Ausrichtung der optischen Achse der Terahertz-Sende- und Empfangseinheit hinzu. Derartige geometrische Daten können vorab durch Messung, insbesondere aber auch durch eine Kalibrierung an einem ersten Messobjekt festgelegt werden, sodass sie nachfolgend zur Auswertung herangezogen werden können.

Erfindungsgemäß sind mehrere Terahertz-Empfangseinheiten vorgesehen, die jeweils die ausgesandte Strahlung passiv aufnehmen. Zur Vermessung eines Rohres als Prüfobjektes können zum Beispiel mehrere Einheiten in einer Kreisform, insbesondere etwa einem Halbkreis angeordnet sein, sodass sie mit ihren überlappenden Aussende- und Empfangs-Kegeln bzw. Winkeln das Prüfobjekt weitflächig erfassen können. Hierbei ist insbesondere auch eine vollumfängliche Vermessung des Prüfobjektes möglich, da die Strahlung jeweils durch eine vordere Wand und eine hintere Wand des Prüfobjektes dringt und hierbei Messsignale erzeugt werden.

Das Synchronisierungssignal zur Festlegung des Sendezeitpunktes, z. B. ein Triggerimpuls oder ein analoges Signal, z. B. Sägezahn-Signal, wird über eine Datenverbindung ausgegeben; es kann insbesondere direkt von der sendenden Terahertz-Sende- und Empfangseinheit ausgegeben werden, die somit insbesondere auch eine Master-Einheit darstellen kann, die das Synchronisierungssignal mit der Information über den Aussendezeitpunkt an die mindestens eine als Slave-Einheit dienende THz-Empfangseinheit ausgibt. Hierdurch ist insbesondere auch die Ausbildung eines modularen Systems, z. B. Bus-Systems, aus miteinander in Datenverbindung stehenden Einheiten möglich, das gegebenenfalls erweitert und stellenweist ausgetauscht werden kann. Alternativ hierzu ist auch ein zentrales System, z. B. sternförmig mit zentraler Steuereinheit, möglich. Die Datenverbindung kann über ein Kabel der auch drahtlos erfolgen.

Gemäß einer bevorzugten Ausbildung kann bei der Vielzahl mehrerer Einheiten jede Einheit zeitweise Terahertz-Sende- und Empfangseinheit sein, und somit zum Beispiel als Master-Einheit den Sendezeitpunkt für die anderen Einheiten festlegen, die jeweils passive Empfangseinheiten sind. So kann die Funktion der Master-Einheit bzw. sendenden Einheit jeweils durch wechseln. Hierdurch wird ein Vorteil einer sehr großflächigen Vermessung bei geringem Aufwand ermöglicht, da unterschiedliche Positionen und Ausrichtungen der sendenden optischen Achse bei jeweils mehreren ergänzend detektierenden optischen Achsen ermöglicht wird.

Somit sind mit geringem Aufwand breitflächige, insbesondere auch vollumfängliche Vermessungen möglich. Es kann ein breiter Aussendekegel der sendenden Einheit und breiter Empfangskegel der empfangenden Einheit genutzt werden, anders als bei nur direkte senkrechte Reflexionen detektierenden Systemen.

Die Vermessung der Prüfobjekte kann in einem kontinuierlichen Verfahren, zum Beispiel bei der Produktion oder nach der Produktion des Prüfobjektes, direkt erfolgen.

Hierbei können Abstände, das heißt Abstand des Prüfobjektes zu den jeweiligen Einheiten, und weiterhin Schichtdicken, zum Beispiel eine Wandstärke, weiterhin auch einen Innendurchmesser als Schichtdicke einer Luft-schicht ermittelt werden. Ergänzend können zusätzlich auftretende Messpeaks als Störstellen detektiert werden.

Das erfindungsgemäße THz-Messverfahren und die erfindungsgemäße THz-Vorrichtung sind insbesondere auch zur Dektektion von Fehlstellen bzw. Fehlern im Prüfobjekt vorteilhaft, da durch die mehreren THz- Empfangseinheiten große Bereiche des Prüfobjektes detektiert werden können. Eine Fehlstelle kann somit als zusätzlicher Messpeak detektiert werden, der insbesondere keiner ordnungsgemäßen Grenzfläche zuzuordnen ist. Somit kann bei Erkennen eines hinreichend hohen zusätzlichen, keiner Grenzfläche zuzuordnenden Messpeaks, d.h. z.B. bei Überschreiten eines Signal-Grenzwertes, ein Fehlersignal ausgeben werden.

Hierbei können mehrere Terahertz-Sende- und Empfangseinheiten um das Prüfobjekt oder eine Prüfobjekt-Position herum verteilt angeordnet sein und jeweils eine Positions- Punktemenge einer oder mehrerer Fehlstellen ermitteln. Von der Steuer- und Auswerteeinrichtung kann aus den mehreren Positions- Punktemengen eine Position und/oder Größe und/oder Form der einzelnen Fehlstellen ermittelt werden.

Fehlstellen können zwischen den Wandbereichen bzw. zwischen den Grenzflächen erkannt werden. Weiterhin können auch nicht ordnungsgemäße Wandbereiche oder Grenzflächen selbst als Fehlstellen bewertet werden. Insbesondere kann eine nicht senkrechte Reflexion, die von einer passiven Empfangseinheit empfangen wird und keinem regulären Wandbereich zuzuordnen ist, als Fehlstelle bewertet werden.

Bei der Bewertung der Signalamplituden kann ein hinreichend hoher, nicht ordnungsgemäßer Messpeak als Fehlstelle bewertet werden, wenn z.B. die Signalamplitude einen Schwellwert überschreitet. Hierbei kann von den mehreren passiven Terahertz- Empfangseinheiten jeweils eine Positions-Punktemenge einer oder mehrerer Fehlstellen ermittelt werden, und somit aus den mehreren Positions- Punktemengen die Anordnung und Form der Fehlstellen ermittelt werden.

Erfindungsgemäß kann somit - ohne Mehraufwand - insbesondere die Position, Form und/oder Größe der Fehlstellen ermittelt werden, da vorzugsweise eine trigonometrische Erfassung aus mehreren Richtungen durch die mehreren Empfangseinheiten möglich ist.

Die Terahertz-Strahlung wird insbesondere im Frequenzbereich von 0,01 THz - 10 THz, z. B. 0,1 bis 3 THz ausgegeben. Hierbei sind insbesondere vollelektronische Sende- und Empfangseinheiten und auch Empfangseinheiten möglich, die somit mittels eines Dipols die Terahertz-Strahlung erzeugen, z. B. in Frequenzmodulation, oder auch elektronisch-optische Systeme für Messungen im Zeitraum, z. B. als gepulste Strahlung.

Die Erfindung wird im Folgenden anhand der beiliegenden Zeichnungen an einigen Ausführungsbeispielen näher erläutert. Es zeigen:
- Fig. 1: eine Terahertz-Messvorrichtung gemäß einer Ausführungsform in Aufsicht bei Vermessung eines Rohres als Prüfobjekt;
- Fig. 2: eine Ausschnittsvergrößerung aus Figur 1 unter Darstellung der Strahlengänge;
- Fig. 3: Diagramme der gemessenen Signalamplitude in Abhängigkeit der Zeit der a) Terahertz-Sende- und Empfangseinheit und b) Terahertz-Empfangseinheiten;
- Fig. 4: eine Ausbildung bei Detektion von Fehlstellen.

Eine Terahertz-Messvorrichtung 1 zur Vermessung eines Prüfobjektes 2, hier eines Kunststoff-Rohres 2, weist eine als Master dienende Terahertz-Sende- und Empfangseinheit 3 und mehrere als Slaves dienende Terahertz-Empfangseinheiten 4 auf. Die (Mater-)Terahertz-Sende- und Empfangseinheit 3 sendet Terahertz-Strahlung 5 aus, zum Beispiel im Frequenzbereich von 0,01 THz - 10 THz, insbesondere 0,1 THz - 3 THz auf; hierzu ist die Terahertz-Sende- und Empfangseinheit 3 vollelektronisch ausgebildet, das heißt sie erzeugt die Terahertz-Strahlung 5 durch einen Dipol, z. B. in Frequenzmodulation, oder auch elektronisch-optisch, z. B. mit Messungen im Zeitraum, z. B. als gepulste Strahlung.

Die Terahertz-Sende- und Empfangseinheit 3 ermöglicht die Messung einer Laufzeit Δt der zu einem Sendezeitpunkt t0 der ausgesandten Terahertz-Strahlung 5, die nachfolgend von einem Prüfobjekt 2 zurück zu der Terahertz-Sende- und Empfangseinheit 3 reflektiert wird. In der Terahertz-Sende- und Empfangseinheit 3 wird die ausgesandte THZ- Strahlung 5 mit der reflektierten THZ- Strahlung 6a überlagert bzw. gemischt, um hieraus z. B. einen Phasenunterschied zu ermitteln, aus dem somit die Laufzeit Δt der ausgesandten Terahertz-Strahlung 5 genau ermittelt werden kann.

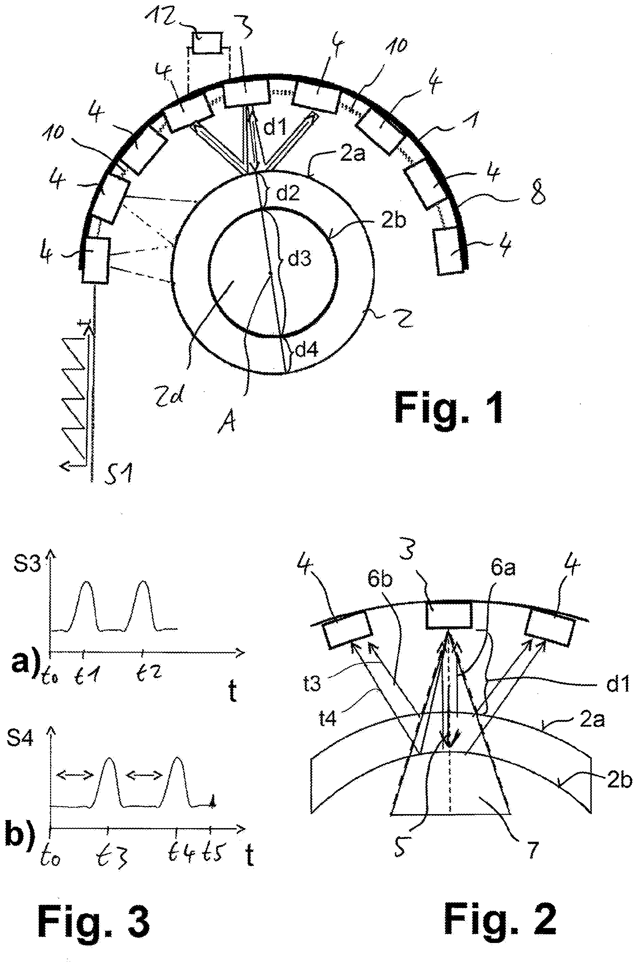

Figur 3a zeigt die aufgenommene Signalamplitude S3 der Terahertz-Sende- und Empfangseinheit 3 als Funktion der Zeit t bei Vermessen des vorderen Wandbereichs des Kunststoff-Rohres 2: die ausgesandte Terahertz-Strahlung 5 wird zunächst an der Außenseite 2a des Kunststoff-Rohres 2 teilweise reflektiert, da ein Übergang von der Umgebung, zum Beispiel Luft mit einem Brechungsindex n0=1, in das Kunststoffmaterial des Prüfobjektes 2 mit zum Beispiel einem Brechungsindex n2=1,5 für übliche Kunststoff-Materialien, stattfindet. Somit wird zum Zeitpunkt t1 ein erster Messpeak detektiert. Nachfolgend gelangt die ausgesandte Terahertz-Strahlung 5 durch die Wand des Prüfobjekts 2 und wird an der Innenfläche 2b beim Übergang von dem Kunststoffmaterial zu Luft wiederum teilweise reflektiert, wobei die reflektierte Terahertz-Strahlung 6 zurück durch das Kunststoffmaterial des Prüfobjektes 2 zu der Terahertz-Sende- und Empfangseinheit 3 reflektiert wird. Aus der Zeitdifferenz Δt= t2 - t1 kann nachfolgend in Kenntnis des Brechungsindex n2 der Abstand zwischen der Außenfläche 2a und der Innenfläche 2b ermittelt werden.

Hierbei fällt die Terahertz-Strahlung 5 senkrecht auf die Außenfläche 2a und die Innenfläche 2b, sodass der ermittelte Abstand d( t2-t1) tatsächlich den lotrechten Abstand d2 zwischen Außenfläche 2a und Innenfläche 2b und somit den Wanddurchmesser d1 wiedergibt. Bei mehrschichtigen Prüfobjekten wie dem Kunststoff-Rohr 2 können somit mit einer Messung die mehreren Schichtdicken aufeinanderfolgenden Schichten mit unterschiedlichen Brechungsindizes detektiert werden. So kann gemäß Figur 1 zunächst ein Abstand d1 von der Terahertz-Sende- und Empfangseinheit 3 zu der Außenfläche 2a, dann die Schichtdicke d2 des vorderen Wandbereichs als Abstand zwischen der Außenfläche 2a und der Innenfläche 2b, weiterhin der Rohr-Innendurchmesser als Schichtdicke d3 der mittleren Luft-Schicht, das heißt des Innenraums 2d, und nachfolgend die Schichtdicke d4 des gegenüberliegenden Wandbereichs als dortiger Abstand der Innenfläche 2b zu der Außenfläche 2a.

Die Signalamplitude S3 kann in Fig. 3 je nach ausgesandter THz-Strahlung 5 eine Funktion der Zeit oder Frequenz dargestellt werden, wobei Zeitabhängigkeiten und Frequenzabhängigkeiten durch eine Fourier-Transformation ineinander umgerechnet werden können.

Weiterhin detektieren auch die Terahertz-Empfangseinheiten 4 die von der Terahertz-Sende- und Empfangseinheit 3 ausgesandte und am Prüfobjekt 2 reflektierte Terahertz-Strahlung 6b, das heißt bei dieser Messung sind sie rein passiv ausgebildet, ohne aktiv Terahertz-Strahlung zu emittieren. Die optischen Achsen C-3 der Terahertz- Empfangseinheiten 4 sind in Umfangsrichtung um das Prüfobjekt 2, das heißt kreisförmig, zum Beispiel in einem Halbkreis, auf einem Außengestell 8 angeordnet, das konzentrisch zu einer Symmetrieachse A der gesamten Terahertz-Messvorrichtung 1 ausgebildet ist. Somit sind bei dieser idealen Anordnung sämtliche Einheiten 3, 4 jeweils derartig ausgebildet, dass ihre optischen Achsen C-4 und C-3 durch die Symmetrieachse A verlaufen.

Die Terahertz-Sende- und Empfangseinheit 3 sendet die Terahertz-Strahlung 5 zum Beispiel gemäß Figur 2 in einem hinreichend großen Abstrahlkegel bzw. Abstrahl-Raumwinkel 7 um ihre optische Achse C-3 aus, sodass ein Teil der ausgesandten Strahlung 5 nicht lotrecht auf die Grenzflächen 2a, 2b trifft und entsprechend seitlich wegreflektiert wird, sodass sie als zweite reflektiert THz-Strahlung 6b von einer der passiven Terahertz-Empfangseinheiten 4 detektiert werden kann.

Die Terahertz-Sende- und Empfangseinheit 3 ist mit den passiven Terahertz-Empfangseinheiten 4 über eine Datenverbindung 10 verbunden, durch die die passiven Terahertz-Empfangseinheiten 4 mit der Terahertz-Sende- und Empfangseinheit 3 synchronisiert werden können. Somit kann der Aussendezeitpunkt t0 den passiven Terahertz-Empfangseinheiten 4 als Information übertragen werden, sodass Laufzeit-Messungen auch durch die passiven Terahertz- Empfangseinheiten 4 möglich sind: die Terahertz-Empfangseinheiten detektieren die Laufzeit der Terahertz-Strahlung, die als Terahertz-Strahlung 5 von der Terahertz-Sende- und Empfangseinheit 3 ausgestrahlt wird, am Prüfobjekt 2 reflektiert und nachfolgend als zweite reflektierte Terahertz- Strahlung 6b von einer Terahertz-Empfangseinheit 4 detektiert wird, wie als Signalamplitude S4 in Fig. 3b dargestellt ist, wobei z. B. zum Zeitpunkt t3 die Reflektion an der Außenfläche 2a und zum Zeitpunkt t4 an der Innenfläche 2b detektiert wird.

Die Datenverbindung 10 kann über ein Signalkabel bzw. ein Kabel-System, zum Beispiel ein Bus- oder Stern-Leitungssystem ausgebildet sein, bzw. auch als Funksignal und somit drahtlos. Hierbei ist die Übermittlung unterschiedlicher Synchronisierungs-Signale S1 möglich. Gemäß der groben Darstellung in Figur 1 kann das Synchronisierungs-Signal S1bei einem vollelektronischen-Terahertzsystem zum Beispiel anhand einer Spannungsrampe, zum Beispiel als Sägezahn-Spannungswert, oder auch als Trigger-Impuls erfolgen, mit der die Terahertz-Sende- und Empfangseinheit 3 ihre Frequenzmodulation erzeugt.

Da die passiven Terahertz-Empfangseinheiten 4 somit reflektierte Terahertz-Strahlung 6b aufnehmen, die nicht-senkrecht von der jeweiligen Grenzfläche 2a oder 2b reflektiert wird, wird zunächst ein nicht lotrechter Abstand d(t4-t3) der Grenzflächen 2a, 2b zueinander und zu den passiven Empfangseinheiten 4 ermittelt. Gemäß Figur 2 sind die ermittelten Abstände d(t4-t3), die den Messpeaks bei t4 und t3 zugeordnet werden könne, jedoch durch die geometrische Anordnung der Terahertz-Sende- und Empfangseinheit 3 und der jeweiligen, empfangenen Empfangseinheit 3 festgelegt, sodass diese geometrische Ausbildung bei der Ermittlung von Abständen berücksichtigt werden kann. Bei idealer Anordnung sind die Einheiten 3, 4 mit ihren optischen Achsen C-3 und C-4 auf die gemeinsame Symmetrieachse A ausgerichtet, so dass sich bei zentraler Lage des Rohres 2 gleichschenklige Dreiecke ergeben. Da eine Vielzahl von THz-Empfangseinheiten vorgesehen ist, ist aber auch eine Vermessung von Prüfobjekten 2 möglich, die gegenüber der Symmetrieachse A - zum Beispiel zeitweise - versetzt sind, sodass eine Rohrachse B ungleich der Symmetrieachse A ist. Durch die Vielzahl einzelner Messungen, bei der die ausgesandte Terahertz-Strahlung 5 nicht nur von der Terahertz-Sende- und Empfangseinheit 3 selbst, sondern den mehreren passiven Empfangseinheiten 4 vermessen wird, kann eine Fehl-Positionierung genauer erfasst werden.

Vorzugsweise kann die Terahertz-Messvorrichtung 1 aus Figur 1 und 2 zunächst kalibriert werden, wodurch die genaue zweidimensionale geometrische Position der Einheiten 3, 4 zueinander festgelegt und für nachfolgende Messungen bekannt ist.

Hierbei kann die Terahertz-Sende- und Empfangseinheit 3 zusammen mit den passiven Empfangseinheiten 4 an eine gemeinsame Auswerteeinrichtung 12 angeschlossen sein, wobei die Auswerteeinrichtung 12 auch zum Beispiel in der Terahertz-Sende- und Empfangseinheit 3 selbst angeordnet sein kann.

Wie in Figur 3b) beim Zeitpunkt t5 angedeutet, können auch Fehlstellen bzw. Fehler im Prüfobjekt 2 genau detektiert werden, da durch die mehreren THz-Empfangseinheiten 4 große Bereiche des Prüfobjektes 2, auch zwischen den Grenzflächen 2a und 2b detektiert werden können. Eine Fehlstelle kann somit als zusätzlicher Messpeak detektiert werden.

Gemäß einer besonders bevorzugten Ausführungsform kann jede Terahertz- Empfangseinheit 4 auch jeweils als Master-Terahertz-Sende- und Empfangseinheit 3 dienen. Somit sind zum Beispiel umlaufende Messungen möglich, bei der mehrere bzw. eine Vielzahl von Sende- und Empfangseinheiten, gemäß Figur 1 somit neun Terahertz-Sende- und Empfangseinheiten 3, sukzessive derartige Messungen durchführen, dass jede von ihnen zeitweise als Terahertz-Sende- und Empfangseinheit 3 dient bzw. wirkt, und die anderen als passive Empfangseinheiten 4. Die Messungen können somit zum Beispiel reihum umlaufen, mit aufeinanderfolgenden Zeitintervallen.

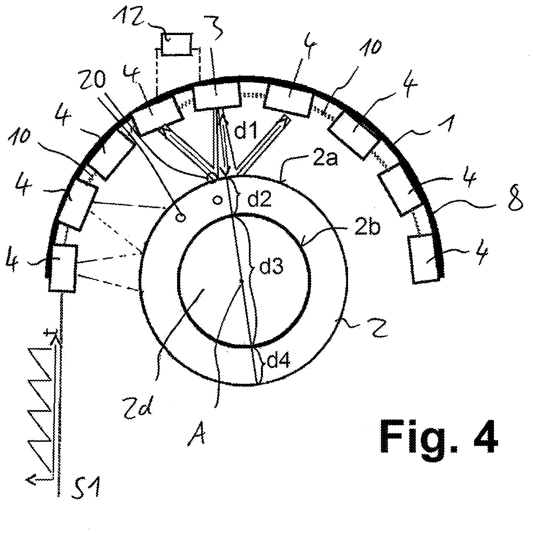

Gemäß Fig. 4 werden im Prüfobjekt 2 Fehlstellen 20 auf oder zwischen den Grenzflächen, d.h. auch in oder auf dem Prüfobjekt 2, detektiert. Derartige Fehlstellen können insbesondere als zusätzliche Messpeaks in den Signalamplituden, d.h. zwischen den Messpeaks der ordnungsgemäßen Grenzflächen 2a, 2b detektiert werden. Somit können die Fehlstellen 20 insbesondere in den Signalamplituden S4 der passiven Empfangseinheiten 4 ermittelt werden, wobei z.B. überprüft werden kann, ob ermittelte zusätzliche Messpeaks einen Schwellwert überschreiten und somit relevante Fehlstellen darstellen.

Es ist insbesondere auch eine trigonometrische Detektion der Fehlstellen 20 möglich, bei der die passiven Empfangseinheiten 4 jeweils Positions-Punktemengen der Fehlstellen liefern, und hieraus z.B. die Form und/oder Größe und/oder Position der Fehlstellen ermittelt wird.

## Patentansprüche

1. Terahertz-Messvorrichtung (1) zum Vermessen eines Prüfobjektes (2) durch eine Laufzeitmessung unter Ermittlung mindestens eines Abstandes (d1, d2, d3, d4),
wobei die Terahertz-Messvorrichtung (1) aufweist:
eine Terahertz-Sende- und Empfangseinheit (3) ausgebildet zum Aussenden von Terahertz-Strahlung (5) und Detektieren der von dem Prüfobjekt (2) reflektierten Terahertz-Strahlung (6a),
eine Auswerteeinheit (12) zur Ermittlung einer Laufzeit (Δt) der Terahertz-Strahlung und mindestens eines Abstandes (d1, d2, d3, d4) des Prüfobjektes (2) aus der ermittelten Laufzeit (Δt),
**dadurch gekennzeichnet, dass**
mehrere passive Terahertz- Empfangseinheiten (4), die um einen Messbereich für das Prüfobjekt (2) herum angeordnet sind, vorgesehen sind, deren optische Achsen (C-4) jeweils zu der optischen Achse (C-3) der Terahertz-Sende- und Empfangseinheit (3) versetzt oder geneigt angeordnet sind so dass zumindest eine der passiven Terahertz-Empfangseinheiten (4) eine von der Terahertz-Sende- und Empfangseinheit (3) ausgesandte und an dem Prüfobjekt (2) reflektierte zweite reflektierte Terahertz- Strahlung (6b) detektiert, eine Datenverbindung (10) ausgebildet zur Synchronisierung der Terahertz-Sende- und Empfangseinheit (3) und der passiven Terahertz-Empfangseinheiten (4) mittels eines Synchronisationssignals (S1) vorgesehen ist,
wobei die Auswerteeinheit (12) oder die zumindest eine Terahertz-Empfangseinheit (4) dazu eingerichtet ist aus der zweiten reflektierten Terahertz- Strahlung (6b) und dem Synchronisationssignal (S1) eine zweite Laufzeit (Δt3, Δt4) und einen zweiten Abstand zu ermitteln.

2. Terahertz-Messvorrichtung (1) nach Anspruch 1, **dadurch gekennzeichnet, dass** die Auswerteeinheit (12) oder die zumindest eine passive Terahertz-Empfangseinrichtung (4) dazu eingerichtet ist gespeicherte geometrische Daten oder Abstandsdaten über die Anordnung der Terahertz-Sende- und Empfangseinheit (3) und der passiven Terahertz-Empfangseinheiten (4) zur Ermittlung des zweiten Abstandes heranzuziehen.

3. Terahertz-Messvorrichtung (1) nach einem der vorherigen Ansprüche, **dadurch gekennzeichnet, dass** die mehreren passiven Terahertz-Empfangseinheiten (4) zur vollumfänglichen Vermessung des Prüfobjektes (2) um den Messbereich für das Prüfobjekt (2), herum angeordnet sind.

4. Terahertz-Messvorrichtung (1) nach einem der vorherigen Ansprüche, **dadurch gekennzeichnet, dass** die Terahertz-Sende- und Empfangseinheit (3) und die mehreren passiven Terahertz- Empfangseinheiten (4) kreisförmig, zum Beispiel unter Bildung eines Halbkreises, um eine Symmetrieachse (A) herum angeordnet sind und ihre optischen Achsen (C-3, C-4) durch die Symmetrieachse (A) verlaufen oder sich in der Symmetrieachse (A) schneiden, insbesondere in einer gemeinsamen Ebene.

5. Terahertz-Messvorrichtung (1) nach einem der vorherigen Ansprüche, **dadurch gekennzeichnet, dass**
die passiven Terahertz- Empfangseinheiten (4) dazu eingerichtet sind Terahertz-Strahlung aufzunehmen, die nicht an ordnungsgemäßen Grenzflächen reflektiert worden ist, und
die Auswerteeinheit (12) oder die Terahertz-Empfangseinheit dazu eingerichtet ist in den Signalamplituden (S4) der passiven Terahertz- Empfangseinheiten (4) Messpeaks, die nicht den ordnungsgemäßen Grenzflächen entsprechen, als Fehlstellen zu ermitteln, insbesondere mit Bestimmung der Position und/oder Form und/oder Größe der Fehlstellen.

6. Terahertz-Messvorrichtung (1) nach einem der vorherigen Ansprüche, **dadurch gekennzeichnet, dass** die Datenverbindung (10) zwischen den Einheiten (3, 4) oder von einer zentralen Auswerteeinheit (12) zu den Einheiten (3, 4) verläuft.

7. Terahertz-Messvorrichtung (1) nach Anspruch 6, **dadurch gekennzeichnet, dass** die Datenverbindung (10) jeweils zwischen zwei benachbarten Einheiten (3, 4; 4, 4) verläuft, zum Beispiel als Bus-System.

8. Terahertz-Messvorrichtung (1) nach einem der vorherigen Ansprüche, **dadurch gekennzeichnet, dass** die sendende Terahertz-Sende- und Empfangseinheit (3) dazu eingerichtet ist das Synchronisationssignal (S1) auszugeben, zum Beispiel als Trigger-Signal zur Festlegung des Sendezeitpunkts (t0) oder als analoges Sägezahn-Signal,
wobei die passiven Terahertz-Empfangseinheiten (4) dazu eingerichtet sind aus dem Synchronisierungssignal (S1) den Sendezeitpunkt (t0) zu ermitteln.

9. Terahertz-Messvorrichtung (1) nach einem der vorherigen Ansprüche, **dadurch gekennzeichnet, dass** die Terahertz-Sende- und Empfangseinheit (3) als Master-Einheit und die passiven Terahertz-Empfangseinheiten (4) als Slave-Einheiten ausgebildet sind.

10. Terahertz-Messvorrichtung (1) nach einem der vorherigen Ansprüche, **dadurch gekennzeichnet, dass** die Terahertz-Sende- und Empfangseinheit (3) dazu eingerichtet ist Terahertz-Strahlung im Frequenzbereich zwischen 0,01 und 10 THz, insbesondere 100 GHz bis 3 THz, auszusenden insbesondere vollelektronisch mittels eines Dipols.

11. Terahertz-Messverfahren zur Vermessung eines Prüfobjektes (2), insbesondere eines Rohres (2), bei dem
eine Terahertz-Sende- und Empfangseinheit (3) Terahertz-Strahlung (6a) entlang seiner optischen Achse (C-3) aussendet und von dem Prüfobjekt (2) reflektierte Terahertz-Strahlung (6a) detektiert, wobei aus einer Laufzeitmessung mindestens eine Zeitdifferenz (Δt) ermittelt wird,
wobei aus der Zeitdifferenz (Δt) ein Abstand (d1, d2, d3, d4) ermittelt wird,
**dadurch gekennzeichnet, dass**
weiterhin mehrere passive Terahertz-Empfangseinheiten (4) um einen Messbereich für das Prüfobjekt (2) herum angeordnet sind, deren optische Achsen (C-4) jeweils zu der optischen Achse (C-3) der Terahertz-Sende- und Empfangseinheit (3) versetzt oder geneigt angeordnet sind und wobei zumindest eine der passiven Terahertz-Empfangseinheiten (4) eine von der Terahertz-Sende- und Empfangseinheit (3) ausgesandte und an dem Prüfobjekt (2) reflektierte zweite Terahertz-Strahlung (6b) empfängt und hieraus mindestens ein zweiter Abstand ermittelt wird,
wobei eine Datenverbindung (10) zur Synchronisierung der Terahertz-Sende- und Empfangseinheit (3) und der passiven Terahertz-Empfangseinheiten (4) mittels eines Synchronisationssignals (S1) vorgesehen ist,
wobei zur Ermittlung des zweiten Abstandes das Synchronisationssignal (S1) zur Festlegung des Sendezeitpunktes (t0) herangezogen wird.

12. Terahertz-Messverfahren nach Anspruch 11, **dadurch gekennzeichnet, dass** das Synchronisationssignal (S1) von der Terahertz-Sende- und Empfangseinheit (3) zu der Terahertz-Empfangseinheit (4) übertragen wird.

13. Terahertz-Messverfahren nach Anspruch 12, **dadurch gekennzeichnet, dass**
die Terahertz-Sende- und Empfangseinheit (3) das Synchronisationssignal (S1) an die mehreren Terahertz-Empfangseinheiten (4) ausgibt, zur Festlegung des Sende-Zeitpunkts (t0), und
die Terahertz-Empfangseinheiten (4) jeweils aus dem Sende-Zeitpunkt (t0) und aus der Signalamplitude (S4) der zweiten reflektierten Strahlung Laufzeiten (Δt3, Δt4) und hieraus geometrische Abstände ermitteln unter Heranziehung gespeicherter Daten über eine geometrische Anordnung, insbesondere eines Abstandes und/oder Winkels der optischen Achsen (C-3, C-4) der Terahertz-Sende- und Empfangseinheit (3) und der Terahertz-Empfangseinheit (4) zueinander.

14. Terahertz-Messverfahren nach einem der Ansprüche 11 bis 13,
**dadurch gekennzeichnet, dass**
mindestens zwei, insbesondere mehr als zwei Terahertz-Sende- und Empfangseinheiten (3) miteinander synchronisiert sind,
wobei aufeinander folgend Terahertz-Messungen erfolgen, bei denen jeweils eine der Terahertz-Sende- und Empfangseinheit (3) aktiv Terahertz-Strahlung (5) aussendet und die anderen Terahertz-Sende- und Empfangseinheit als passive Terahertz-Empfangseinheiten (4) reflektierte Strahlung messen, und nachfolgend
eine andere der Terahertz-Sende- und Empfangseinheiten (3) Terahertz-Strahlung (5) sendet und die mindestens eine andere Terahertz-Sende- und Empfangseinheit als passive Terahertz-Empfangseinheit (4) detektiert.

15. Terahertz-Messverfahren nach einem der Ansprüche 11 bis 14, **dadurch gekennzeichnet, dass** aus den Messungen der ersten und/oder zweiten reflektierten Terahertz-Strahlung (6a, 6b) Abstände zu Grenzflächen oder zwischen Grenzflächen des Prüfobjektes (2) und weiterhin aus der detektierten zweiten Terahertz-Strahlung (6b), zusätzlich Abstände von Fehlstellen in oder auf dem Prüfobjekt (2) ermittelt werden, insbesondere aus reflektierter Terahertz-Strahlung, die nicht an ordnungsgemäßen Grenzflächen des Prüfobjektes reflektiert worden ist.

16. Terahertz-Messverfahren nach Anspruch 15, **dadurch gekennzeichnet, dass** die Terahertz-Empfangseinheiten (4) jeweils eine Positions-Punktemenge einer oder mehrerer Fehlstellen (10, 110) ermitteln, und aus den mehreren Positions- Punktemengen eine Position und/oder Größe und/oder Form der einzelnen Fehlstellen (10, 110) ermittelt wird.

17. Terahertz-Messverfahren nach einem der Ansprüche 11 bis 16, **dadurch gekennzeichnet, dass** die Laufzeitmessung als Messung im Zeitraum, z. B. mit gepulster Terahertz-Strahlung, oder als Messung im Frequenzraum, z. B. mit Frequenzmodulation, erfolgt.

18. Terahertz-Messverfahren nach einem der Ansprüche 11 bis 17, **dadurch gekennzeichnet, dass** als Prüfobjekt (2) ein Rohr vermessen wird, das senkrecht zu einer durch die Terahertz-Strahlung festgelegten Detektionsebene gefördert wird, insbesondere kontinuierlich in einem Endlosverfahren, wobei das Rohr (2) voll umfänglich vermessen wird.

## Claims

1. Terahertz measuring apparatus (1) for measuring a test object (2) by means of a run-time measurement while determining at least one distance (d1, d2, d3, d4),
said terahertz measuring apparatus (1) comprising:
a terahertz transmitter and receiver unit (3) designed for emitting terahertz radiation (5) and detecting the terahertz radiation (6a) reflected from said test object (2),
an evaluation unit (12) for determining a run-time (Δt) of the terahertz radiation and at least one distance (d1, d2, d3, d4) of said test object (2) from the determined run-time (Δt),
**characterised in that**
several passive terahertz receiver devices (4) arranged around a measuring region for said test object (2) are provided, the optical axes (C-4) of which are each arranged shifted or angled in relation to the optical axis (C-3) of said terahertz transmitter and receiver unit (3), so that at least one of said passive terahertz receiver devices (4) detects a second terahertz radiation (6b) emitted from said terahertz transmitter and receiver unit (3) and reflected on said test object (2),
a data connection (10) is provided designed for synchronising said terahertz transmitter and receiver unit (3) and the passive terahertz receiver units (4) by means of a synchronising signal (S1),
said evaluation unit (12) or said at least one terahertz receiver unit (4) being designed for determining a second run-time (Δt3, Δt4) and a second distance from said second reflected terahertz radiation (6b) and said synchronising signal (S1).

2. Terahertz measuring apparatus (1) according to claim 1, **characterised in that** said evaluation unit (12) or said at least one passive terahertz receiver device (4) is designed for utilizing stored geometric data or distance date relating to the arrangement of said terahertz transmitter and receiver unit (3) and said passive terahertz receiver units (4) for determining said second distance.

3. Terahertz measuring apparatus (1) according to one of the above claims, **characterised in that** said several passive terahertz receiver units (4) are arranged around said measuring region for said test object, for the purpose of measuring the entire perimeter of said test object (2).

4. Terahertz measuring apparatus (1) according to one of the above claims, **characterised in that** said terahertz transmitter and receiver unit (3) and said several passive terahertz receiver units (4) are arranged in a circular manner, for example, forming a semi-circle, about a symmetry axis (A) and their optical axes (C-3, C-4) run through said symmetry axis (A) or intersect in the symmetry axis (A), in particular, in a common plane.

5. Terahertz measuring apparatus (1) according to one of the above claims, **characterised in that**
said passive terahertz receiver units (4) are designed to pick up terahertz radiation which has been reflected not on proper boundary surfaces, and
said evaluation unit (12) or said terahertz receiver unit is designed to determine measuring peaks in the signal amplitudes (S4) of said passive terahertz receiver units (4) that do not correspond to the proper boundary surfaces as impurities, in particular, while determining the position and/or shape and/or size of the impurities.

6. Terahertz measuring apparatus (1) according to one of the above claims, **characterised in that** said data connection (10) runs between said units (3, 4) or from a central evaluation unit (12) to said units (3, 4).

7. Terahertz measuring apparatus (1) according to claim 6, **characterised in that** said data connection (10) runs always between two adjacent units (3, 4; 4, 4), for example as a bus system.

8. Terahertz measuring apparatus (1) according to one of the above claims, **characterised in that** the emitting terahertz transmitter and receiver unit (3) is designed to put out said synchronising signal (S1), for example as a trigger signal for specifying the time of transmission (t0) or as an analogue saw tooth signal,
said passive terahertz receiver units (4) being designed for determining the time of transmission (t0) from said synchronization signal (S1).

9. Terahertz measuring apparatus (1) according to one of the above claims, **characterised in that** said terahertz transmitter and receiver unit (3) are designed as master unit and said passive terahertz receiver units (4) as slave units.

10. Terahertz measuring apparatus (1) according to one of the above claims, **characterised in that** said terahertz transmitter and receiver unit (3) is designed to emit terahertz radiation in a frequency range between 0.01 and 10 THz, in particular 100 GHz and 3 THz, in particular, fully electronically by means of a dipole.

11. Terahertz measuring method for measuring a test object (2), in particular, a pipe (2), wherein
a terahertz transmitter and receiver unit (3) emits terahertz radiation (6a) along its optical axis (C-3) and
detects terahertz radiation (6a) reflected from said test object (2), whereby at least one time difference (Δt) is determined from a run-time measurement,
wherein
a distance (d1, d2, d3, d4) is determined from the time difference (Δt),
**characterised in that**
further, several passive terahertz receiver units (4) are arranged around a measuring region of the test object (2),
the optical axes (C-4) of which are each arranged shifted or angled in relation to the optical axis (C-3) of said terahertz transmitter and receiver unit (3),
and where at least one of said passive terahertz receiver units (4) receives second terahertz radiation (6b) emitted by said terahertz transmitter and receiver unit (3) and reflected on said test object (2), and at least one second distance is determined from this,
whereby a data connection (10) for synchronising the terahertz transmitter and receiver unit (3) and the passive terahertz receiver units (4) by means of a synchronising signal (S1) is provided, said synchronising signal (S1) for specifying the time of transmission (t0) being utilized for determining said second distance.

12. Terahertz measuring method according to claim 11, **characterised in that** said synchronising signal (S1) is transmitted from said terahertz transmitter and receiver unit (3) to said terahertz receiver unit (4).

13. Terahertz measuring method according to claim 12, **characterised in that**
said terahertz transmitter and receiver unit (3) puts out said synchronising signal (S1) to said several terahertz receiver units (4) for specifying the time of transmission (t0), and
said terahertz receiver units (4) each determine, from the time of transmission (t0) and from the signal amplitude (S4) of the second reflected radiation, run-times (Δt3, Δt4) and, from these, geometric distances using stored data relating to a geometric arrangement, in particular, a distance and/or angle of the optical axes (C-3, C-4) of said terahertz transmitter and receiver unit (3) and said terahertz receiver unit (4) in relation to each other.

14. Terahertz measuring method according to one of the claims 11 through 13, **characterised in that**
at least two, in particular, more than two terahertz transmitter and receiver units (3) are synchronised with each other, whereby, successively, terahertz-measurements are carried out in which always one of said terahertz transmitter and receiver units (3) actively emits terahertz radiation (5) and the other terahertz transmitter and receiver units, as passive terahertz receiver units (4), measure reflected radiation, and, subsequently,
another of said terahertz transmitter and receiver units (3) emits terahertz radiation (5) and the at least one other terahertz transmitter and receiver unit detects as passive terahertz receiver unit (4).

15. Terahertz measuring method according to one of the claims 11 through 14, **characterised in that** distances to boundary surfaces or between boundary surfaces of said test object (2) are determined from the measurements of said first and/or second reflected terahertz radiation (6a, 6b) and, further, additionally, distances of impurities in or on said test object (2) are determined from the detected second terahertz radiation (6b), in particular, from reflected terahertz radiation which has been reflected not on proper boundary surfaces of said test object.

16. Terahertz measuring method according to claim 15, **characterised in that** said terahertz receiver units (4) each determine a position point set of one or more impurities (10, 110), and a position and/or size and/or shape of the individual impurities (10, 110) is determined from the several position point sets.

17. Terahertz measuring method according to one of the claims 11 through 16, **characterised in that** the run-time measurement are carried out as measurements in the time domain, e.g. using pulsed terahertz radiation, or as measurements in the time frequency domain, e.g. using frequency modulation.

18. Terahertz measuring method according to one of the claims 11 through 17, **characterised in that** a pipe is measured as the test object (2) which is being conveyed perpendicularly to a detection determined by the terahertz radiation, in particular, continuously in a continuous process, with said pipe (2) being measured in its entire perimeter.

## Revendications

1. Dispositif de mesure térahertz (1) destiné à mesurer un objet à tester (2) par l'intermédiaire d'une mesure du temps de propagation en déterminant au moins un écart (d1, d2, d3, d4),
le dispositif de mesure térahertz (1) présentant :
une unité d'émission et de réception térahertz (3) conçue pour émettre un rayonnement térahertz (5) et détecter le rayonnement térahertz réfléchi (6a) par l'objet à tester (2),
une unité d'évaluation (12) destinée à déterminer un temps de propagation (_{△}t) du rayonnement térahertz et au moins un écart (d1, d2, d3, d4) de l'objet à tester (2) à partir du temps de propagation (_{△}t) déterminé, **caractérisé en ce que** des multiples unités de réception térahertz passives (4) sont prévues qui sont disposées autour d'une zone de mesure pour l'objet à tester et dont les axes optiques (C-4) sont respectivement disposés de manière décalée ou inclinée par rapport à l'axe optique (C-3) de l'unité d'émission et de réception térahertz (3),
de sorte qu'au moins une des unités de réception térahertz passives (4) détecte un second rayonnement térahertz réfléchi (6b) émis par l'unité d'émission et de réception térahertz (3) et réfléchi sur l'objet à tester (2), une liaison de données (10) est prévue qui est conçue pour synchroniser l'unité d'émission et de réception térahertz (3) et les unités de réception térahertz passives (4) au moyen d'un signal de synchronisation (S1), l'unité d'évaluation (12) ou l'au moins une unité de réception térahertz (4) étant agencée pour déterminer un second temps de propagation (_{△}t3, _{△}t4) et un second écart à partir du second rayonnement térahertz réfléchi (6b) et du signal de synchronisation (S1).

2. Dispositif de mesure térahertz (1) suivant la revendication 1, **caractérisé en ce que** l'unité d'évaluation (12) ou l'au moins une unité de réception térahertz passive (4) est agencée pour utiliser des données géométriques ou des données d'écart enregistrées relatives à la disposition de l'unité d'émission et de réception térahertz (3) et des unités de réception térahertz passives (4) pour déterminer le second écart.

3. Dispositif de mesure térahertz (1) suivant une des revendications précédentes, **caractérisé en ce que** les multiples unités de réception térahertz passives (4) sont disposées autour de la zone de mesure pour l'objet à tester (2) pour une mesure de la circonférence intégrale de l'objet à tester (2).

4. Dispositif de mesure térahertz (1) suivant une des revendications précédentes, **caractérisé en ce que** l'unité d'émission et de réception térahertz (3) et les multiples unités de réception térahertz passives (4) sont disposées de manière circulaire, par exemple en formant un demi-cercle, autour d'un axe de symétrie (A) et **en ce que** leurs axes optiques (C-3, C-4) s'étendent à travers l'axe de symétrie (A) ou se croisent dans l'axe de symétrie (A), en particulier dans un plan commun.

5. Dispositif de mesure térahertz (1) suivant une des revendications précédentes, **caractérisé en ce que** les unités de réception térahertz passives (4) sont agencées pour absorber le rayonnement térahertz qui n'a pas été réfléchi sur des interfaces adéquates, et **en ce que** l'unité d'évaluation (12) ou l'unité de réception térahertz est agencée pour déterminer dans des amplitudes de signal (S4) des unités de réception térahertz passives (4) des pics de mesure qui ne correspondent pas aux interfaces adéquates comme étant des imperfections, en particulier en déterminant la position et/ou la forme et/ou la taille des imperfections.

6. Dispositif de mesure térahertz (1) suivant une des revendications précédentes, **caractérisé en ce que** la liaison de données (10) s'étend entre les unités (3, 4) ou d'une unité d'évaluation centrale (12) aux unités (3, 4).

7. Dispositif de mesure térahertz (1) suivant la revendication 6, **caractérisé en ce que** la liaison de données (10) s'étend respectivement entre deux unités (3, 4 ; 4, 4) voisines, par exemple sous la forme d'un système bus.

8. Dispositif de mesure térahertz (1) suivant une des revendications précédentes, **caractérisé en ce que** l'unité d'émission et de réception térahertz (3) émettrice est agencée pour émettre le signal de synchronisation, par exemple sous la forme d'un signal de déclenchement servant à déterminer le moment précis de l'émission (t0) ou sous la forme d'un signal en dents de scie analogique, les unités de réception térahertz passives (4) étant agencées pour déterminer le moment précis de l'émission (t0) à partir du signal de synchronisation (S1).

9. Dispositif de mesure térahertz (1) suivant une des revendications précédentes, **caractérisé en ce que** l'unité d'émission et de réception térahertz (3) est conçue comme unité maître et les unités de réception térahertz passives (4) comme unités esclaves.

10. Dispositif de mesure térahertz (1) suivant une des revendications précédentes, **caractérisé en ce que** l'unité d'émission et de réception térahertz (3) est agencée pour émettre un rayonnement térahertz dans la plage de fréquence entre 0,01 et 10 THz, en particulier de 100 GHz à 3 THz, en particulier de manière entièrement électronique au moyen d'un dipôle.

11. Procédé de mesure térahertz destiné à mesurer un objet à tester (2), en particulier un tube (2), procédé, dans lequel une unité d'émission et de réception térahertz (3) émet un rayonnement térahertz (6a) le long de son axe optique (C-3) et détecte le rayonnement térahertz réfléchi (6a) par l'objet à tester, au moins une différence de temps (_{△}t) étant déterminée à partir du temps de propagation, un écart (d1, d2, d3, d4) étant déterminé à partir de la différence de temps (_{△}t), **caractérisé en ce qu'**en plus de multiples unités de réception térahertz passives (4) sont disposées autour d'une zone de mesure pour l'objet à tester (2), dont les axes optiques sont disposés respectivement de manière décalée ou inclinée par rapport à l'axe optique (C-3) de l'unité d'émission et de réception térahertz (3) et au moins une des unités de réception térahertz passives (4) recevant un second rayonnement térahertz (6b) émis par l'unité d'émission et de réception térahertz (3) et réfléchi sur l'objet à tester (2) et, à partir de cela, un second écart est déterminé, une liaison de données (10) pour la synchronisation de l'unité d'émission et de réception térahertz (3) et des unités de réception térahertz passives (4) étant prévue au moyen d'un signal de synchronisation (S1), le signal de synchronisation (S1) pour la fixation du moment précis de l'émission (t0) étant utilisé pour déterminer le second écart.

12. Procédé de mesure térahertz suivant la revendication 11, **caractérisé en ce que** le signal de synchronisation (S1) est transmis de l'unité d'émission et de réception térahertz (3) à l'unité de réception térahertz (4).

13. Procédé de mesure térahertz suivant la revendication 12, **caractérisé en ce que** l'unité d'émission et de réception térahertz (3) émet le signal de synchronisation (S1) vers les multiples unités de réception térahertz (4) pour fixer le moment précis de l'émission (t0), et **en ce que** les unités de réception térahertz (4) déterminent respectivement des temps de propagation (_{△}t3, _{△}t4) à partir du moment précis de l'émission (t0) et à partir de l'amplitude de signal (S4) du second rayonnement réfléchi et, à partir de cela, des écarts géométriques en utilisant les données mémorisées relatives à une disposition géométrique, en particulier à un écart et/ou à un angle formé entre les axes optiques (C-3, C-4) de l'unité d'émission et de réception térahertz (3) et de l'unité de réception térahertz (4).

14. Procédé de mesure térahertz suivant une des revendications 11 à 13, **caractérisé en ce qu'**au moins deux, en particulier plus de deux unités d'émission et de réception térahertz (3) sont synchronisées l'une avec l'autre, des mesures térahertz ayant lieu en se succédant, où respectivement une des unités d'émission et de réception térahertz (3) émet activement un rayonnement térahertz (5) et les autres unités d'émission et de réception térahertz mesurent un rayonnement réfléchi en tant qu'unités de réception térahertz passives (4), après quoi une autre des unités d'émission et de réception térahertz (3) émet un rayonnement térahertz (5) et l'au moins une autre unité d'émission et de réception térahertz (4) détecte en tant qu'unité de réception térahertz passive (4).

15. Procédé de mesure térahertz suivant une des revendications 11 à 14, **caractérisé en ce qu'**à partir des mesures du premier et/ou du second rayonnement térahertz réfléchi (6a, 6b), des écarts par rapport à des interfaces ou entre des interfaces de l'objet à tester (2) et à partir du second rayonnement térahertz (6b) détecté, des écarts supplémentaires par rapport à des imperfections dans ou sur l'objet à tester (2) sont déterminés en plus, en particulier à partir d'un rayonnement térahertz réfléchi qui n'a pas été réfléchi sur des interfaces adéquates de l'objet à tester.

16. Procédé de mesure térahertz suivant une des revendications 11 à 16, **caractérisé en ce que** les unités de réception térahertz (4) déterminent respectivement une quantité de points de position d'une ou de plusieurs imperfections (10, 110) et **en ce qu'**à partir de ces plusieurs quantités de points de position est déterminée une position et/ou une taille et/ou une forme des différentes imperfections (10, 110).

17. Procédé de mesure térahertz suivant une des revendications 11 à 16, **caractérisé en ce que** la mesure du temps de propagation a lieu sous la forme d'une mesure dans la période de temps, par exemple au moyen d'un rayonnement térahertz pulsé ou sous la forme d'une mesure dans l'espace fréquentiel, par exemple au moyen d'une modulation de fréquence.

18. Procédé de mesure térahertz suivant une des revendications 11 à 17, **caractérisé en ce que** comme objet à tester (2) est mesuré un tube qui est transporté perpendiculairement à un plan de détection défini par le rayonnement térahertz, en particulier continuellement, au cours d'un procédé en continu, le tube (2) étant mesuré sur l'intégralité de sa circonférence.
